Europäisches Patentamt

European Patent Office

Office européen des brevets

(19)

(11) EP 0 732 665 A1

(12) **EUROPEAN PATENT APPLICATION**

(43) Date of publication:
18.09.1996 Bulletin 1996/38

(51) Int. Cl.$^6$: **G06K 11/16**, G06K 11/06

(21) Application number: 95114162.1

(22) Date of filing: 09.09.1995

(84) Designated Contracting States:
DE ES FR GB IT PT

(30) Priority: 16.03.1995 JP 84656/95

(71) Applicant: **Wacom Co., Ltd.**
Saitama-ken, 349-11 (JP)

(72) Inventors:
• **Murakami, Azuma**
Kitasaitama-gun, Saitama-ken, 349-11 (JP)
• **Sugiyama, Keiichi**
Kitasaitama-gun, Saitama-ken, 349-11 (JP)

(74) Representative: **Müller, Enno, Dipl.-Ing. et al**
**Corneliusstrasse 45**
**42329 Wuppertal (DE)**

(54) **Coordinate input apparatus and method**

(57)   A coordinate input apparatus and a method therefore for making it possible to accurately input a drawing even when an operator arbitrarily changes the orientation of the drawing drawn on paper during input. The coordinate input apparatus includes a first indication means, a rotary plate being rotatable around the center specified in a position detection surface, a second indication means incorporated into the rotary plate being rotatable together with the rotary plate, and a relative coordinate calculation means for calculating a relative coordinate of a coordinate specified by the first indication means with respect to a coordinate specified by the second indication means.

Fig.1

## Description

### BACKGROUND OF THE INVENTION

Field of the Invention

The present invention relates to a coordinate input apparatus which is generally called a tablet or a digitizer, and an input method therefor.

Description of the Prior Art

In general, a tablet or the like is used as a device, for inputting two-dimensional absolute values, in a data processing system such as a computer system or a CAD system. One example of a detection method for the tablet is the detection of a specific coordinate and switch data relating to this coordinate by means of interchange of electromagnetic waves between a position detection plate, in which a plurality of coil-like sensors are aligned in a direction of position detection, and a position indicator such as a cursor or a stylus pen with a built-in resonance circuit or the like. Usually, in the position detection plate, two position detection planes, i.e., an X plane and a Y plane are crossed at right angles to obtain a two-dimensional coordinate value. Nowadays, a cordless position indicator and a built-in-battery-free position indicator are more widely used. See, for example, Japanese Patent Publn. No. H2(1990)-53805 and Japanese Patent Publication Laid-open No. H3(1991)-147012 owned by the applicant of the present application. Particularly, the latter patent publication also discloses a coordinate input apparatus having a number of position indicators (possessing a so-called multi-device function).

The multi-device function will now be briefly explained. A coordinate input apparatus is commonly made up of one position indicator with one built-in coordinate indication means (a resonance circuit or a coil), and a position detection plate (which is sometimes called a tablet). However, in view of various demands for improving the functions and operability of an operating system (OS) and applications, it is desirable, in some cases, for a plurality of position indicators to be operated while being placed on the position detection plate. In some special applications, it has become desirable for a plurality of coordinate position indication means to be provided in one position indicator. In order to realize the multi-device function, a method for identifying each of the plurality of position indicators or coordinate indication means becomes necessary. The above-mentioned Japanese Patent Publication Laid-open No. H3(1991)-147012 discloses one example in which such a multi-device function is realized. According to the application of this publication, a plurality of coordinate indication means are provided in such a way that frequencies of electromagnetic waves interchanged between sensor coils on a position detection plate and position indicators differ from each other. Specifically, it becomes possible to identify each of the plurality of coordinate indication means by making resonance frequencies of the coordinate indication means differ from each other, and by carrying out transmission and reception at a frequency corresponding to each coordinate indication means.

The usage of the tablet will now be described. When the tablet is in use, it is common to execute various pointer operations of an operating system appearing on a display screen of a computer system by indication of a desired pointer on a position detection plate using a position indicator. In this case, inputting switch may be carried out by pressing a switch on a menu sheet with switches drawn thereon, superimposed on the position detection plate in a desired arrangement, using a stylus pen.

Moreover, particularly in applications involving graphics such as CAD or the like, drawings may be inputted to a computer system by tracing the drawings previously drawn on ordinary paper with a position indicator. Such input work will be, for example, performed in the following manner. Four corners of the paper with the original drawings are first fixed on the tablet with Scotch tape or the like. Lines constituting the drawings are then traced with a stylus pen or the like. In some cases, the lines of the drawings thus inputted by means of such manual tracing operations are digitized as they are. However, in most cases, the lines are digitized after having been converted into smooth curves and straight lines without fluctuations caused by the manual tracing operations, and the digitized lines are displayed on a display screen or stored into a storage medium.

When inputting drawings by means of the previously mentioned tracing operations, an operator frequently feels that it is easier to trace the drawings when the orientation thereof is changed. If the tracing is performed on, for example, a desk, the tracing is carried out while the orientation of the drawings is appropriately changed. It is quite natural for everybody to have a preferred posture when drawing. Moreover, the level of ease when drawing depends on the person because the easiness is greatly determined by personal preference.

Conventionally, it is necessary to fix the drawings on the position detection plate throughout the tracing. If the paper comes away from the plate during the course of the tracing, it is impossible to correctly input the drawings from the paper. It would be necessary to accurately fix the paper to the original position or perform the tracing again from the beginning. Hence, it is necessary for an operator to trace a drawing fixed in one orientation, even though this would be difficult for the operator to trace.

### SUMMARY OF THE INVENTION

In view of the foregoing drawbacks in the prior art, the object of the present invention is to provide a coordinate input apparatus which permits accurate input of drawings even when their orientation is arbitrarily changed during the input of the drawings when those drawn on paper are input by the use of the coordinate input apparatus.

Another object of the present invention is to provide a coordinate input apparatus which realizes comfortable operability for the operator when drawings drawn on paper are inputted by the use of the coordinate input apparatus.

To these ends, according to one aspect of the present invention, a coordinate input apparatus is provided, including a position detection surface in which a plurality of coils are aligned in a direction of position detection. Also, at least one indication means having a coil or a resonance circuit, the coordinate input apparatus determining a coordinate indicated by the indication means from a signal obtained by electromagnetic interaction between the position detection surface and the indication means, the coordinate input apparatus comprising of: a rotary plate made of a flat plate positioned parallel to, and within, the position detection surface, the rotary plate being rotatable around the center specified in the position detection surface; a rotary plate orientation recognition means for acquiring information on variations in orientation of the rotary plate resulting from rotation of the rotary plate; and a relative coordinate calculation means which calculates a relative coordinate, with respect to the rotary plate positioned at the coordinate indicated by the indication means, on the basis of the coordinate indicated by the indication means and the information from the rotary plate orientation recognition means when the indication means indicates the position on the rotary plate.

In one preferred embodiment of the coordinate input apparatus according to the present invention, the coordinate input apparatus possessing a multi-device function, comprises of: a first indication means which can indicate an arbitrary position in the position detection surface; a rotary plate made of a flat plate positioned parallel to, and within, the position detection surface, the rotary plate being rotatable around the center specified in the position detection surface; a second indication means incorporated into the rotary plate both being rotatable together; and a relative coordinate calculation means which calculates a relative coordinate of a coordinate indicated by the first indication means, with respect to a coordinate indicated by the second indication means, on the basis of the coordinate indicated by the first indication means and the coordinate indicated by the second indication means when the first indication means indicates the position on the rotary plate.

In another preferred embodiment of the coordinate input apparatus according to the present invention, the coordinate input apparatus possessing a multi-device function further comprises a support means which specifies a position of the center of the rotary plate and rotatably supports the rotary plate.

In still another preferred embodiment of the coordinate input apparatus according to the present invention, the support means is a plate having the same thickness as the rotary plate positioned in the position detection surface, and the support means is made up of a rotary plate support frame having a circular aperture in which the rotary plate is rotatable while in contact with an interior circumference of the circular aperture.

In a further preferred embodiment of the coordinate input apparatus according to the present invention, the rotary plate is a circular plate having the same shape as the circular aperture of the rotary plate support frame.

In a still further preferred embodiment of the coordinate input apparatus according to the present invention, the rotary plate is a square plate which comes into contact with an internal circumference of the circular aperture of the rotary plate support frame.

In a still further preferred embodiment of the coordinate input apparatus according to the present invention, the rotary plate is an equilateral triangle which comes into contact with an internal circumference of the circular aperture of the rotary plate support frame.

In a still further preferred embodiment of the coordinate input apparatus according to the present invention, the support means is composed of a substantially circular arc-shaped guide member positioned along a part of the outer periphery of the rotary plate, and the guide member is in slidable contact with the rotary plate but remains in a fixed position with respect to the position detection surface by virtue of a frictional force.

In a still further preferred embodiment of the coordinate input apparatus according to the present invention, the support means is a fixed plate sandwiched between the position detection surface and the rotary plate, and the fixed plate rotatably supports the center position of the rotary plate via a shaft member perpendicular to the fixed plate, and the fixed plate is brought into slidable contact with the rotary plate but remains in a fixed position with respect to the position detection surface by virtue of a frictional force.

In a still further preferred embodiment of the coordinate input apparatus according to the present invention, the rotary plate is a rectangular plate.

In a still further preferred embodiment of the coordinate input apparatus according to the present invention, the rotary plate is a triangular plate.

In a still further preferred embodiment of the coordinate input apparatus according to the present invention, the rotary plate is provided with a finger grip indentation formed in the surface thereof.

In a still further preferred embodiment of the coordinate input apparatus according to the present invention, the rotary plate is provided with a finger grip projecting from a surface thereof.

In a still further preferred embodiment of the coordinate input apparatus according to the present invention, the first indication means is a stylus pen.

In a still further preferred embodiment of the coordinate input apparatus according to the present invention, a stopper mechanism is provided for stably stopping the rotary plate at a plurality of preset positions when the rotary plate rotates.

According to a second aspect of the present invention, a coordinate input method is provided for use in a coordinate input apparatus including a position detection surface in which a plurality of coils are aligned in a direction of position detection, and at least one indication means having a coil or a resonance circuit, the coordinate input apparatus deciding a coordinate indicated by the indication means from a signal obtained by electromagnetic action between the position detection surface and the indication means, the coordinate input method comprising the steps of: providing a rotary plate made of a flat plate positioned parallel to, and within, the position detection surface, the rotary plate being rotatable around the center specified in the position detection surface; recognizing variations in orientation of the rotary plate resulting from rotation of the rotary plate and calculating a relative coordinate, with respect to the rotary plate positioned at the coordinate indicated by the indication means, on the basis of the coordinate indicated by the indication means and information on the orientation of the rotary plate when the indication means indicates the position on the rotary plate.

In one preferred embodiment of the coordinate input method according to the present invention, the coordinate input method for use in a coordinate input apparatus possessing a multi-device function, comprising the steps of: providing a first indication means which can indicate an arbitrary position in the position detection surface; providing a rotary plate made of a flat plate positioned parallel to, and within, the position detection surface, the rotary plate being rotatable around the center specified in the position detection surface; providing a second indication means fitted into the rotary plate which is rotatable together with the same; and calculating a relative coordinate to a coordinate indicated by the first indication means, with respect to a coordinate indicated by the second indication means, on the basis of the coordinate indicated by the first indication means and the coordinate indicated by the second indication means when the first indication means indicates the position on the rotary plate.

In another preferred embodiment of the present invention, in the input of graphics data on the rotary plate by the use of the first indication means, the input is done while rotating the rotary plate.

In still another preferred embodiment of the present invention, in the input of graphics data, drawn on paper fixed on top of the rotary plate, by the use of the first indication means, the input is done by tracing the graphics while the orientation of the graphics is changed by rotating the rotary plate through a desired angle.

In the coordinate input apparatus having the previously mentioned structure, when graphics data is input by tracing a drawing drawn on paper placed on the rotary plate, an object drawing will be accurately inputted if the orientation of the drawing is changed as a result of rotation of the rotary plate during the input.

Although a coordinate detected by the indication means is an absolute coordinate with respect to the position detection surface, an absolute coordinate relating to the drawing fixed on the rotary plate is offset from a coordinate constituting the drawing (i.e., a relative coordinate with respect to the rotary plate) only by a turning angle through which the rotary plate rotates. However, the coordinate input apparatus of the present invention is provided with means capable of constantly recognizing the orientation of the rotary plate, and therefore it is possible to continually obtain information as to the amount of rotation, and the current orientation, of the rotary plate.

In this way, it is possible to convert the absolute coordinate into a relative coordinate with respect to the rotary plate by subtracting an influence of rotation of the rotary plate from the absolute coordinate, obtained by the indication means, with the use of the information about the orientation of the rotary plate.

In this preferred embodiment of the present invention, the coordinate input apparatus possessing a multi-device function capable of detecting a plurality of coordinates with a plurality of indication means is used, and an ordinary indication means for detecting an absolute coordinate with respect to the position detection surface is employed as the first indication means. In addition, an indication means incorporated into the rotary plate, which detects the orientation of the rotary plate by rotating together with the rotary plate, is employed in an integrated fashion as the second indication means. Graphic data irrelevant to the orientation of the rotary plate is obtained by calculation of a relative coordinate value from two absolute coordinates obtained by the two indication means.

In a further preferred embodiment of the present invention, various rotary plate support frames are used as previously stated. These rotary plate support frames specify the center of the rotary plate at a predetermined position and support the rotary plate so as to permit smooth slidable movement of the rotary plate.

In a still further preferred embodiment of the present invention, the rotary plate can be formed into a desired shape.

The coordinate input method according to the present invention is a method for inputting graphic data from top of the rotary plate using the foregoing coordinate input apparatus. It is possible to accurately input a drawing irrespective of the rotation of the rotary plate when inputting a drawing is carried out on the rotary plate.

The coordinate input apparatus of the present invention has the above-described constitution, hence, the following advantageous results will be obtained.

When a drawing drawn on paper is inputted using the coordinate input apparatus with the paper placed on the rotary plate, it is possible to accurately input the drawing even if the orientation of the drawing is arbitrarily changed by rotating the rotary plate during the input. Specifically, the relative position of the drawing with respect to the rotary plate is irrespective of the rotation of the rotary plate. This results in greatly improved operability in the input of a drawing from an operator's point of view. In other words, it is possible for an operator to change the orientation of a drawing in any direction, in which the operator feels it is easy to trace the drawing, by rotating the rotary plate anytime during the input.

Moreover, according to the present invention, since the rotary plate having the built-in second position indicator is provided, it is possible to easily draw a circular arc and a circumference not by moving the first position indicator but by moving the rotary plate (i.e., the second position indicator). This results in further improved operability.

Further, according to the present invention, the center position of the rotary plate is specified and fixedly maintained at least during the input, and the rotary plate support frame for supporting the rotary plate is provided so that the rotary plate can rotate smoothly. Hence, it is possible to accurately calculate a relative coordinate with respect to the rotary plate on the basis of a coordinate indicated by the position indicator which directly detects graphic data.

BRIEF DESCRIPTION OF THE DRAWINGS

Fig. 1 is a schematic perspective view showing a coordinate input apparatus in a first embodiment of the present invention.
Figs. 2A to 2C are diagrammatic representations respectively showing the constituent elements of the coordinate input apparatus shown in Fig. 1.
Fig. 3 is a diagrammatic representation showing the manner of inputting a drawing, according to the present invention with the use of a position detection plate in the first embodiment shown in Fig. 1.
Figs. 4A and 4B are explanatory views for illustrating the utility of a graphic input apparatus, according to the present invention, in view of operability.
Figs. 5A and 5B are diagrammatic representations showing one embodiment of a rotary plate of the graphic input apparatus, according to the present invention, which is rotatable only in one direction.
Figs. 6A to 6E are schematic representations showing several different embodiments of the rotary plate of the coordinate input apparatus according to the present invention.
Fig. 7 is a schematic representation showing a coordinate input apparatus in a second embodiment of the present invention.
Figs. 8A to 8D are schematic representations showing a coordinate input apparatus in a third embodiment of the present invention and;
Figs. 9A to 9C are schematic representations showing a coordinate input apparatus in a fourth embodiment of the present invention.

DESCRIPTION OF THE PREFERRED EMBODIMENTS

A coordinate input apparatus of the present invention can be utilized in a multi-purpose personal computer system or a data processing system such as a CAD system.

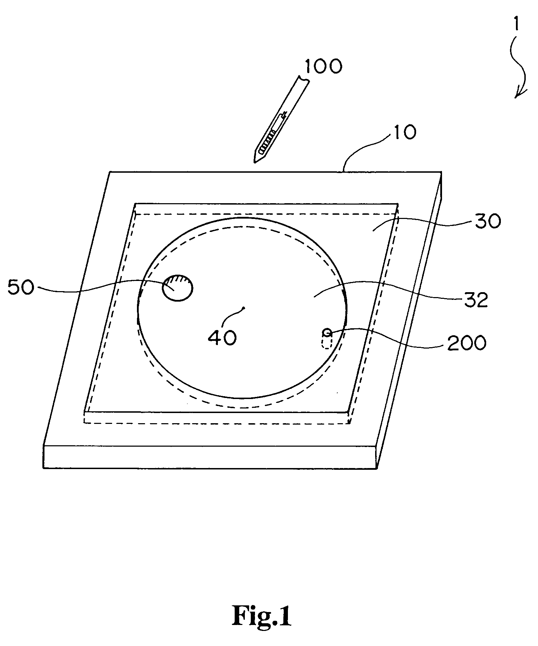

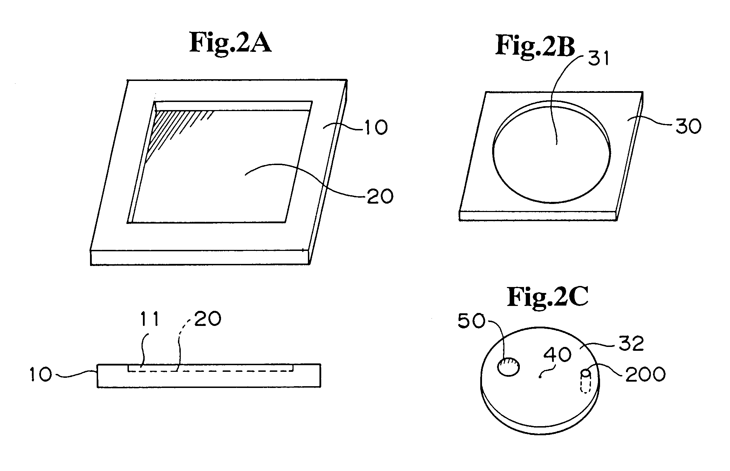

A coordinate input apparatus in the first embodiment of the present invention will now be described referring to Fig.1 and Figs. 2A to 2C. Fig. 1 is a schematic perspective view showing a coordinate input apparatus 1 in a first embodiment of the present invention. Strictly speaking, in addition to the hardware shown in Fig. 1, the coordinate input apparatus 1 further includes software, such as a tablet driver, usually installed in a system. Figs. 2A to 2C respectively show constituent elements of the coordinate input apparatus shown in Fig. 1 to make them easy to understand. The coordinate input apparatus shown in Fig. 1 is made up of a position detection plate 10; an input area 20 formed over the surface of the position detection plate 10; a first position indicator 100; a rotary plate support frame 30 fitted into a rectangular depression formed in the position detection plate 10; a rotary plate 32 fitted into the rotary plate support frame 30; a second position indicator 200 incorporated into the rotary plate 30; and an optional finger grip hole 50. Although the first position indicator 100 is shown as a stylus pen in Fig. 1, it may also be a cursor. The first position indicator serves as a first coordinate indication means, and it is a common position indicator with a built-in coil or resonance circuit having an inherent tuning frequency. One or a plurality of switches for use in inputting switch information are usually provided on a side face of the first position indicator.

Fig. 2A consists of a perspective view and a side elevation view of the position detection plate 10 in the first embodiment shown in Fig. 1. Differing from a common position detection plate consisting of a flat surface, the position detection plate 10 of the present invention has a rectangular depression 11 formed at the center thereof, and the base surface of this depression 11 serves as an area where position detection is effectively carried out, i.e., the input area 20. The surface of the input area 20 is coated, and groups of coils for the X-axis and Y-axis respectively are arranged to cross each other at right angles below the input area 20. The rotary plate support frame 30 shown in Fig. 2B is fitted into the depression 11. The outer periphery of the rotary plate support frame 30 is matched with the shape of the interior of the depression 11. An annular opening 31 is formed at the center of the rotary plate support frame 30, and a rotary plate 32 shown in Fig. 2C having the same shape as the opening is fitted into the annular opening 31. The thicknesses of the rotary plate support frame 30 and the rotary plate 32 are matched with the depth of the depression 11. Accordingly, the surface of the position detection plate 10 becomes flat while the rotary plate support frame 30 and the rotary plate 32 are assembled in the position detection plate 10. The thicknesses of the rotary plate support frame 30 and the rotary plate 32 should be set so that there is no interference with the detection of position by the position indicator 100, because an increased thickness of the rotary plate results in a higher detection level of the position indicator 100, thereby rendering the position indicator 100 spaced further apart from a position detection plane.

In the embodiment shown in Fig. 1, the rotary plate 32 is shaped as a disk. The second position indicator 200 is incorporated into the rotary plate 32 so as to be embedded therein. Specifically, it is desirable that the second position indicator 200 should not appear on the outside of the rotary plate 32, particularly, on the front surface side of the rotary plate 32. The second position indicator 200 serves as a second coordinate indication means, and is made up of a coil or a resonance circuit in the same manner as the first position indicator 100. However, the second position indicator 200 possesses an inherent tuning frequency which differs from that of the first position indicator 100. The second position indicator 200 is positioned outside the center 40 of the rotary plate 32, and it is preferably positioned close to the circumference of the rotary plate 32 rather than in the vicinity of the center 40.

A flat even surface, made by the rotary plate support frame 30 and the rotary plate 32, is situated above the input area 20 of the position detection plate 10. The rotary plate 32 can be slid move with respect to the rotary plate support frame 30. The magnitude of a force required to slid the rotary plate 32 should preferably be set to such an extent that the rotary plate 32 rotates when an operator pushes it slightly with a finger but stops immediately when the pushing of the rotary plate 32 is stopped. In other words, the rotary plate 32 slides moves with respect to the surface of the input area 20 that is the base surface of the depression 11 of the position detection plate 10. To realize such slidable movement, the material and surface roughness of contact surfaces, provided between the rotary plate 32 and the surface of the input area 20 and between the rotary plate 32 and the rotary plate support frame 30, are appropriately selected. Although it is desirable that the front surface of the rotary plate 32 be even, it may be possible to provide a shallow recess for use as a finger grip at an appropriate position on the rotary plate 32 so as to make it easy for an operator to push when rotating the rotary plate 32.

The rotary plate support frame 30 and the rotary plate 32 may be either transparent or opaque. When a menu sheet is laid over the base surface of the depression 11, and when the position detection plate is used while the menu sheet is pressed by the rotary plate support frame 30 and the rotary plate 32, as a matter of course, the rotary plate support frame 30 should be transparent so that the menu sheet will be visible through the rotary plate support frame 30. An example of material suitable for the rotary plate support frame 30 and the rotary plate 32 is acrylic resin.

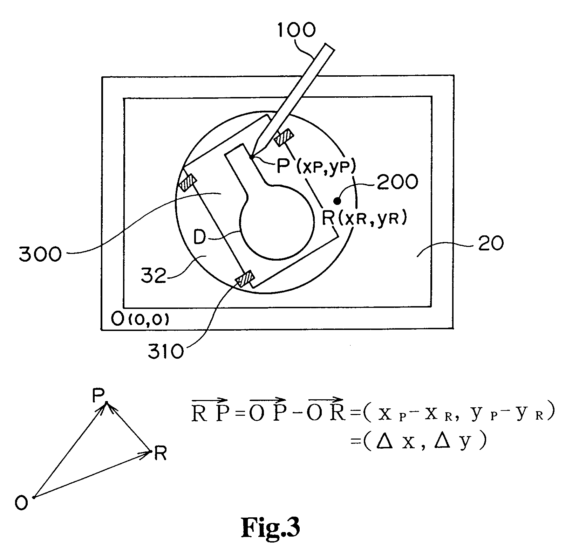

Fig. 3 shows a manner of inputting a drawing, according to the present invention, with the use of the position detection plate in the first embodiment shown in Fig. 1. In the example of the operation shown in Fig. 3, a drawing D is input by tracing the drawing D using the first position indicator 100. An operator first fixes the paper 300 with the drawing D drawn thereon on the rotary plate 32 with Scotch tapes, etc. It is important that the operator can appropriately rotate the rotary plate 32 during the tracing. Hence, it is possible for the operator to rotate the drawing D in any direction by the rotation of the rotary plate 32, so that it is easy for the operator to trace the drawing.

According to the present invention, it is possible to accurately input a drawing even when the drawing is traced while being rotated in the manner previously mentioned. This is due to the fact that the second position indicator 200 fixed to the rotary plate 32 provides an absolute coordinate R $(x_R, y_R)$ which represents a position of rotation of the rotary plate 32 at the same time that the first position indicator 100 indicates an absolute coordinate P $(x_P, y_P)$ where the drawing D is to be formed. Both the second position indicator 200 and the drawing paper 300 are fixed on top of the rotary plate 32, and hence they rotate around the center 40 in conjunction with the rotation of the rotary plate 32. Accordingly, a relative position of the point P $(x_P, y_P)$ on the drawing D drawn on the drawing paper 300, with respect to the point R $(x_R, y_R)$ where the second position indicator 200 is located, is irrelevant to the rotation of the rotary plate 32. As can be seen from a vector diagram and a vector equation shown in a lower part of Fig. 3, it is possible to accurately reproduce the drawing D by calculation of a relative coordinate $(x_P-x_R, y_P-y_R)=(\Delta x, \Delta y)$ of the point P with respect to the point R.

The means for calculating the relative coordinate can be incorporated into a signal processing section of the coordinate input apparatus. Specifically, in an ordinary process of position detection in the coordinate input, apparatus possessing a multi-device function, an absolute coordinate which each position indicator indicates, i.e., where each position indicator is positioned, is calculated. Subsequently, a relative coordinate of the first position indicator 100 with respect to the second position indicator 200 is calculated from each of the absolute coordinates of the first and second position indicators by means of a relative coordinate calculation means according to the present invention. In this calculation, subtraction of coordinates is carried out for each axis. A group of relative coordinates $(\Delta x, \Delta y)$ thus obtained accurately represent the drawing D. Subsequently, when the drawing D is represented or processed using an absolute coordinate, the relative coordinates can be converted into absolute coordinates by adding the relative coordinate to an absolute coordinate at a given reference point. As a matter of course, the relative coordinates may remain as they are, in a case where the relative coordinates can be directly processed.

Naturally, a coordinate of the first position indicator is directly used without conversion when the first position indicator 100 is not located on the rotary plate 32. It is determined whether or not a coordinate detected by the first position indicator 100 should be converted, on the basis of the coordinate being on the rotary plate 32 or not.

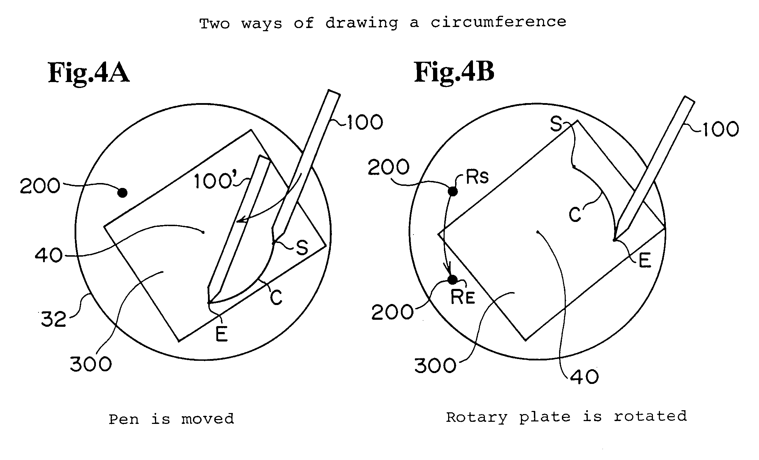

Figs. 4A and 4b are explanatory views for illustrating the utility of the graphic input apparatus, according to the present invention, in view of operability. In particular, the drawings show an operation for drawing (or tracing) a circumference or a circular arc. Fig. 4A shows the ordinary operation for drawing a circular arc C from a start point S to an end point E around the center 40 of the rotary plate 32. Specifically, the circular arc C is drawn without moving the rotary plate 32, i.e., the drawing paper 300, but by moving the stylus pen 100 from the start point S to the end point E. As shown in Fig. 4B, the stylus pen 100 remains fixed at a point in an absolute coordinate, and the tip of the stylus pen 100 draws the circular arc C from the start point S to the end point E by rotating the rotary plate 32, i.e., the drawing paper 300. At this time, the second position indicator 200 moves from RS to RE. It is evident that an accurate circular arc can be more easily drawn by means of the method shown in Fig. 4B when compared with the method shown in Fig. 4A. In this way, the coordinate input apparatus according to the present invention is particularly useful in drawing a concentric circumference or a circular arc.

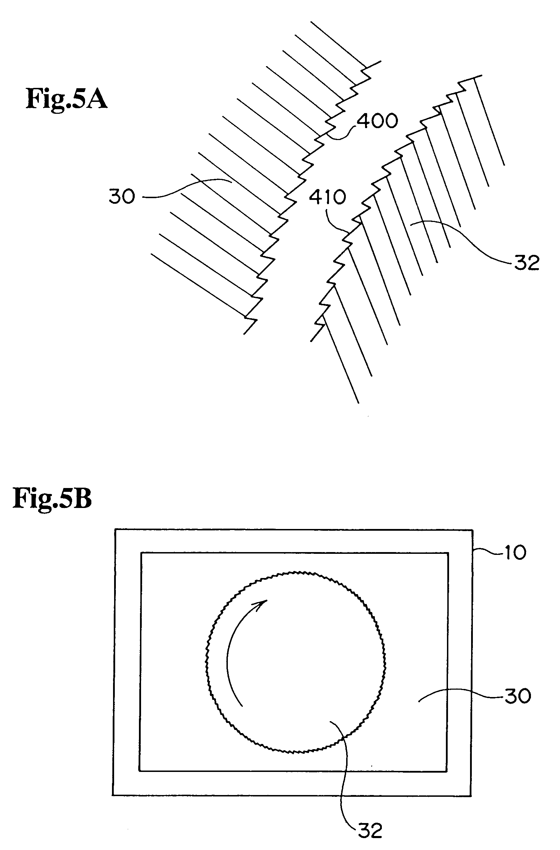

The rotary plate 32 of the coordinate input apparatus, according to the present invention, should preferably be rotatable in both directions. However, if the rotary plate 32 is rotatable only in one direction, sufficient practicability will still be obtained. Hence, the rotary plate rotatable only in one direction also falls within the scope of the present invention. Figs. 5A and 5B show one embodiment of the coordinate input apparatus equipped with a rotary plate which is rotatable only in one direction. Fig. 5A is a partially enlarged view of the rotary plate support frame 30 and the rotary plate 32. To facilitate understanding, the rotary plate support frame 30 and the rotary plate 32 are drawn to be separated from each other. Minute saw-toothed grooves 400 are formed along the internal circumference of the circular opening 31 of the rotary plate support frame 32. Teeth 410 are provided along the peripheral wall of the rotary plate 30 so as to mesh with the grooves 400. A cross section of the grooves 400 and the teeth 410 has a saw-toothed asymmetric angular shape as shown in Fig. 5A. Fig. 5B shows the position detection plate 10 in which the rotary plate support frame 30 and the rotary plate 32 are assembled. The grooves 400 and the teeth 410 mesh with each other, and the rotary plate 32 can rotate only in the direction designated by an arrow. Reverse rotation of the rotary plate 32 is prevented by contact between the teeth 410 and the grooves 400.

The rotary plate 32 having the construction shown in Figs. 5A and 5B is rotatable only in one direction, but it has an advantage that the rotary plate is less prone to become loose and is stably supported because the rotary plate and the rotary plate support frame mesh with each other.

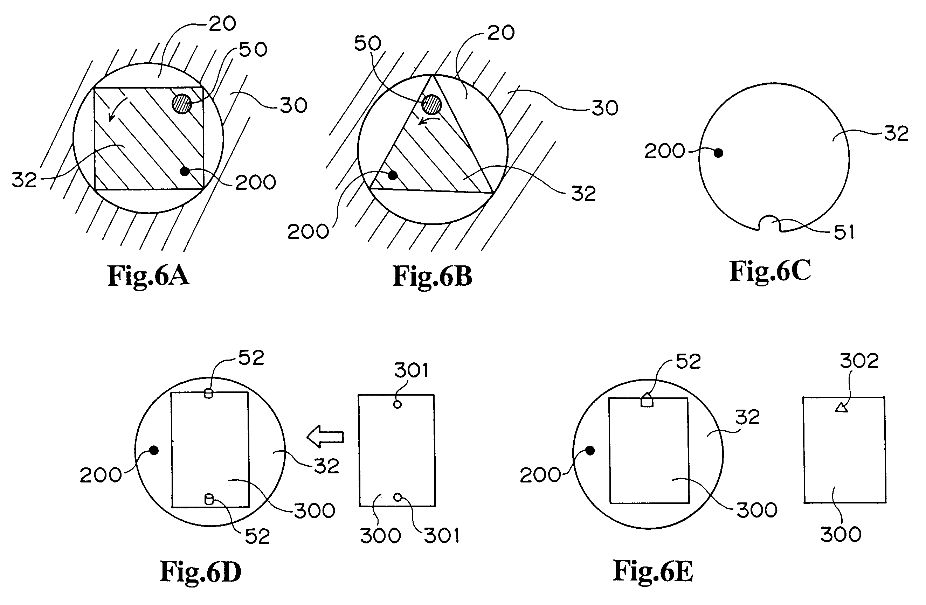

Figs. 6A to 6E show several different embodiments of the rotary plate 32 of the coordinate input apparatus according to the present invention. Fig. 6A shows the rotary plate 32 made of a square plate where the periphery comes into contact with the internal circumference of the rotary plate support frame 30. The position indicator 200 is incorporated at a position other than the center. Fig. 6B shows the rotary plate 32 made of an equilateral triangle whose periphery comes into contact with the internal circumference of the rotary plate support frame 30. Similarly, the position indicator 200 is incorporated at a position other than the center. In the embodiments shown in Figs. 6A and 6B, the finger grip 50 may be formed in the rotary plate in the same manner as in the first embodiment shown in Fig. 1. However, since it is possible to rotate the rotary plate 32 with a finger slipped into a gap between the rotary plate 32 and the rotary plate support frame 30, the finger grip 50 will be unnecessary. In general, the rotary plate 32 should preferably be formed into a disk as shown in Fig. 1. However, in special applications, the rotary plates as shown in Figs. 6A and 6B may be more convenient. For example, if drawing paper fixed on the rotary plate 32 has a square or equilateral triangular shape, it will be easy to attach the paper.

The rotary plate 32 shown in Fig. 6C has a disk shape, and a finger grip portion 51 is made in the rotary plate by partially cutting the outer circumference thereof.

The rotary plate 32 shown in Fig. 6D has finger grips 52 for rotating purposes which are not recessed but projected. Only one finger grip 52 is sufficient to rotate the rotary plate 32. In the embodiment shown in Fig. 6D, the two cylindrically projecting finger grips 52 formed on the rotary plate 32 can also serve as a paper guide to fixedly position the paper 300 with circular holes 301, having the same shape, formed therein. In addition, like the embodiment shown in Fig. 6E, the projecting finger grips 52 are formed into polygonal studs such as a triangular stud, and guide holes 302 formed in the paper 300 are also formed into the same shape. As a result of this, it is possible to fixedly position the paper 300 on the rotary plate 32 by the use of only one finger grip 52.

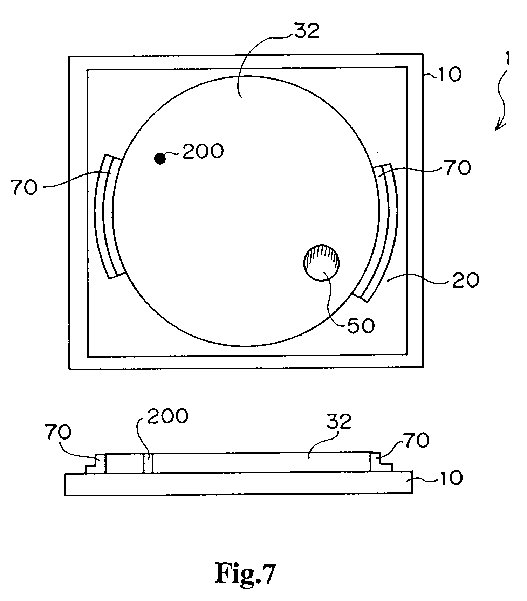

Fig. 7 is a schematic representation showing the coordinate input apparatus 1 in a second embodiment of the present invention. In the embodiment shown in Fig. 7, surfaces of the position detection plate 10 and its input area 20 are flatly formed, and the rotary plate 32 is used while being positioned within the input area 20. The second position indicator 200 is incorporated into the rotary plate 32, and the finger grip 50 is optionally formed in the same. The rotary plate 32 is fixed by guide members 70 disposed along the rotary plate 32 so that the rotary plate 32 will not bring about parallel movement. In the illustrated embodiment, the guide members 70 have such a substantial circular-arc shape as to fit along the outer circumference of the rotary plate 32. The number and shape of the guide members 70 can be variously designed, and it is necessary for the guide members to have a bottom surface which does not easily slide on the input area 20 of the position detection plate 10. However, it is not desirable for the guide members 70 to be fixedly attached to the input area 20 by means of, for example, screws or the like (because this will result in an undetectable area). For this reason, it is desirable that the guide members 70 be positioned on the input area 20 so as not to slide, by virtue of a frictional force. However, in the same manner as previously mentioned in the first embodiment shown in Fig. 1, the material and surface roughness of contact surfaces, provided between the rotary plate 32 and the input area 20 and between the rotary plate 32 and the guide members 70, are selected so that the rotary plate 32 can easily move slidably. In the embodiment shown in Fig. 7, the rotary plate 32 can be positioned at a desired location within the input area 20. The input of a drawing drawn on a drawing paper placed on top of the rotary plate 32 can be carried out in completely the same manner as in the embodiment shown in Fig. 1.

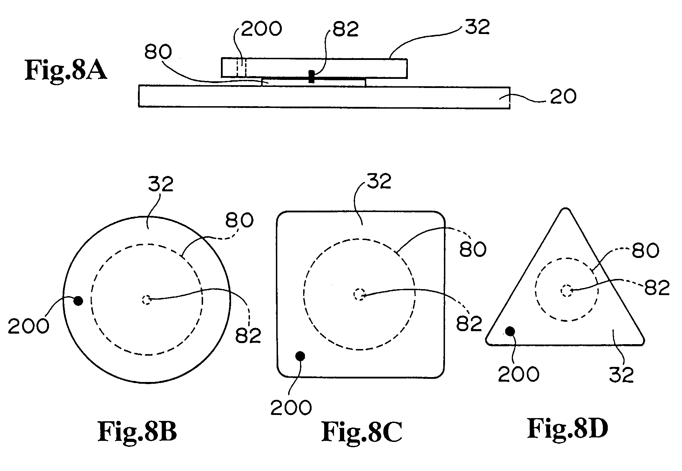

Figs. 8A to 8D are schematic representations showing a third embodiment of the coordinate input apparatus 1 according to the present invention. As shown in a side elevation view of Fig. 8A, a fixed plate 80 is disposed on the input area 20 of the position detection plate 10. The rotary plate 32 is placed on the fixed plate 80 in such a way that a rotary shaft 82 positioned at the center of the fixed plate 80 is inserted into a shaft hole drilled in the center of the bottom surface of the rotary plate 32. The fixed plate 80 is optionally shaped, but it is preferably made smaller than the rotary plate 32 and invisible from the outside. The fixed plate 80 should be designed so that the total thickness of the rotary plate 32 and the fixed plate 80 will be sufficiently smaller than a detectable height of the position indicator. A lower surface of the fixed plate 80 is brought into contact with the input area 20 by utilization of a frictional force so that the fixed plate 80 cannot easily slide. Moreover, an upper surface of the fixed plate 80 is brought into contact with the bottom surface of the rotary plate 32 so that the rotary plate 32 can easily slid.

Figs. 8B, 8C and 8D respectively show the circular rotary plate 32, the square rotary plate 32 and the triangular rotary plate 32 which are to be disposed on top of the fixed plate 80 shown in Fig. 8A. In the embodiments shown in Figs. 8A to 8D, the rotary plate 32 can be freely designed.

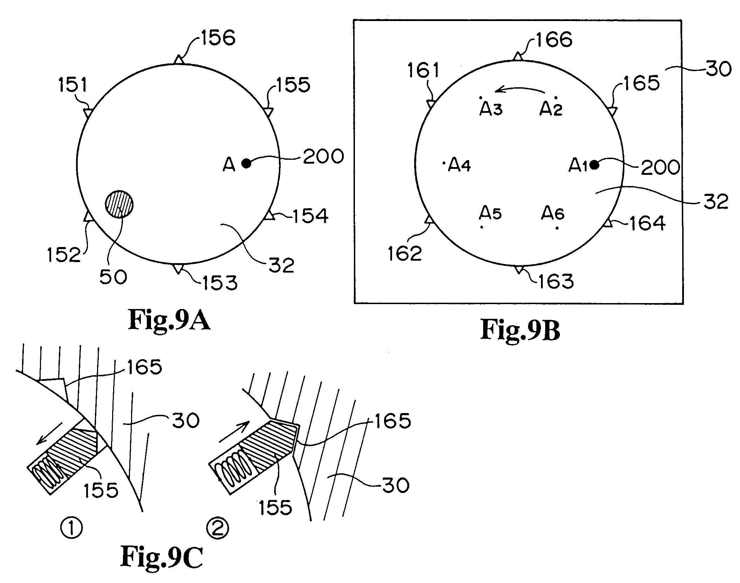

Figs. 9A to 9C are schematic representations showing the coordinate input apparatus 1 in a fourth embodiment according to the present invention. Similarly to the first embodiment shown in Fig. 1, the embodiment shown in Figs. 9A to 9C is of the type in which the rotary plate support frame 30 and the rotary plate 32 are fitted into the depression 11 of the position detection plate 10. Fig. 9A shows the rotary plate 32, and Fig. 9B shows the rotary plate support frame 30. The feature of this embodiment resides in the constitution in which the rotary plate 32 stops precisely at preset turning angles. As shown in Fig. 9A, stoppers 151 to 156 are provided along the outer circumferential side surface of the rotary plate 32 at regular angular intervals (every 60° in the drawing). Meanwhile, as shown in Fig. 9B, stopper indentations 161 to 166 are also provided along the inner circumferential side surface of the rotary plate support frame 30 at positions corresponding to the stoppers 151 to 156 on the rotary plate. Although the stoppers and the stopper indentations are shown as if they are visible from above so as to facilitate comprehension, it is desirable, in fact, that the stoppers and stopper indentations be formed so as not to completely transverse the thickness of the rotary plates and the rotary plate support frame so that the flatness of the surface of the rotary plate will be maintained. Various multi-purpose mechanisms are available as the stopper mechanism. For example, as shown in Fig. 9C, the stopper mechanism is arranged so that the stopper 155 having an angular head can project out of, and retract into, the outer circumferential side surface of the rotary plate by means of a spring. The stopper indentation 165 into which the angular head of the stopper 155 can fit is formed in the rotary plate support frame 30. The stopper 155 is housed in the rotary plate 32 in a retracted state while being brought into contact with an area having no stopper indentations in the rotary plate support frame 30. When the stopper 155 comes to the stopper indentation 165 as a result of rotation of the rotary plate 32, the angular head of the stopper 155 projects out of the rotary plate 32 and meshes with the stopper indentation 165. Thus, the rotary plate 32 can temporarily stop at a preset stop in a stable manner. When the rotary plate 32 is rotated again from the stop, all that needs to be done is to push the rotary plate 32 with a slightly stronger force to overcome the spring force of the stopper 155.

The coordinate input apparatus 1 equipped with the stopper mechanism shown in Figs. 9A to 9C has the advantage that the process of position detection can be simplified. Ordinarily, in the process of position detection, all coils in the input area are first scanned in order to detect an approximate position of the point indicator (this process will be hereinafter referred to as a rough detection process). Subsequently, sensor coils, from which most intensive receiving signals are obtained, and several sensor coils in the vicinity thereof are scanned again, and the accurate position of the point indicator is calculated from the data (this process will be hereinafter referred to as a fine detection process). When the rotary plate 32 is in a stop position, the second position indicator 200, incorporated into the rotary plate 32 of the coordinate input apparatus 1 shown in Figs. 9A to 9C, is in any one of the positions designated by A1 to A6. Coordinates of the points A1 to A6 are already known, and their absolute coordinates are determined by the design of the rotary plate 32 of the coordinate input apparatus 1. Accordingly, in order to determine a coordinate of the second position indicator when the rotary plate 32 is in the stop position, all that needs to be done is to carry out the previously mentioned rough detection process. It is easy to identify at which one of the points A1 to A6 the second point indicator is positioned.

A plurality of stop positions are formed in the rotary plate, and drawing is performed at each of the stop positions. This makes the drawing easy, because the rotary plate will not move upon exertion of a slight force during the drawing operation.

Moreover, when the rotary plate 32 rotates stepwise at preset angular intervals as shown in Figs. 9A to 9C, the second position indicator can be omitted. Specifically, if the turning angle of the rotary plate 32 is not determined from a coordinate obtained by the second position indicator but can be determined by another means, the second position indicator will be unnecessary. In this case, the coordinate input apparatus 1 will become a so-called single device in which only the first position indicator is used as a position indicator. For example, one of the stoppers of the rotary plate 32 is provided with one switch contact point, and each stopper indentation of the rotary plate support frame 30 is provided with another switch contact point. The switch is designed to be closed as a result of contact between the switch contact points when the rotary plate 32 comes to a stop position. It is possible to determine the turning angle of the rotary plate 32 by the use of a means for identifying which contact point of the stopper mechanism is closed. When a drawing placed on top of the rotary plate 32 is inputted, the drawing is traced using the first point indicator by appropriately stopping the rotary plate at a stop position where tracing is easy to perform. A coordinate thus obtained by the first position indicator is converted into a coordinate by the utilization of the obtained turning angle of the rotary plate 32, whereby accurate graphics data can be obtained.

Several embodiments of the invention have now been described in detail. It is to be noted, however, that these descriptions of specific embodiments are merely illustrative of the principles underlying the inventive concept. It is contemplated that various modifications of the disclosed embodiments, as well as other embodiments of the invention will, without departing from the spirit and scope of the invention, be apparent to persons skilled in the art.

**Claims**

1. A coordinate input apparatus including a position detection surface in which a plurality of coils are aligned in a direction of position detection, and at least one indication means having a coil or a resonance circuit, said coordinate input apparatus deciding a coordinate indicated by said indication means from a signal obtained by electromagnetic action between said position detection surface and said indication means, said coordinate input apparatus comprising:

    a rotary plate made of a flat plate positioned parallel to, and within, said position detection surface, said rotary plate being rotatable around the center specified in said position detection surface;
    a rotary plate orientation recognition means for acquiring information on variations in orientation of said rotary plate resulting from rotation of said rotary plate; and
    a relative coordinate calculation means which calculates a relative coordinate, with respect to said rotary plate positioned at the coordinate indicated by said indication means, on the basis of said coordinate indicated by said indication means and said information from said rotary plate orientation recognition means when said indication means indicates said position on said rotary plate.

2. A coordinate input apparatus including a position detection surface in which a plurality of coils are aligned in a direction of position detection, and a plurality of coils or resonance circuits, said coordinate input apparatus possessing a multi-device function for deciding each coordinate indicated by each of said plurality of indication means from a signal obtained by electromagnetic action between said position detection surface and said indication means, said coordinate input apparatus comprising:

    a first indication means which can indicate an arbitrary position in said position detection surface;
    a rotary plate made of a flat plate positioned parallel to, and within, said position detection surface, said rotary plate being rotatable around the center specified in said position detection surface;
    a second indication means incorporated into said rotary plate being rotatable together with the same; and
    a relative coordinate calculation means which calculates a relative coordinate of a coordinate indicated by said first indication means, with respect to a coordinate indicated by said second indication means, on the basis of said coordinate indicated by said first indication means and said coordinate indicated by said second indication means when said first indication means indicates said position on said rotary plate.

3. A coordinate input apparatus including a position detection surface in which a plurality of coils are aligned in a direction of position detection, and a plurality of coils or resonance circuits, said coordinate input apparatus possessing a multi-device function for deciding each coordinate indicated by each of said plurality of indication means from a signal obtained by electromagnetic action between said position detection surface and said indication means, said coordinate input apparatus comprising:

a first indication means which can indicate an arbitrary position in said position detection surface;

a rotary plate made of a flat plate positioned parallel to, and within, said position detection surface, said rotary plate being rotatable around the center specified in said position detection surface;

a support means which specifies a position of said center of said rotary plate and rotatably supports said rotary plate;

a second indication means incorporated into said rotary plate being rotatable together with the same; and

a relative coordinate calculation means which calculates a relative coordinate of a coordinate indicated by said first indication means, with respect to a coordinate indicated by said second indication means, on the basis of said coordinate indicated by said first indication means and said coordinate indicated by said second indication means when said first indication means indicates said position on said rotary plate.

4. The coordinate input apparatus according to claim 3, wherein said support means is a plate having the same thickness as said rotary plate positioned in said position detection surface, and said support means is made up of a rotary plate support frame having a circular aperture in which said rotary plate is slidably rotatable while in contact with an interior circumference of said circular aperture.

5. The coordinate input apparatus according to claim 4, wherein said rotary plate is a circular plate having the same shape as said circular aperture of said rotary plate support frame.

6. The coordinate input apparatus according to claim 4, wherein said rotary plate is a square plate which comes into contact with an internal circumference of said circular aperture of said rotary plate support frame.

7. The coordinate input apparatus according to claim 4, wherein said rotary plate is an equilateral triangle which comes into contact with an internal circumference of said circular aperture of said rotary plate support frame.

8. The coordinate input apparatus according to claim 3, wherein said support means is composed of a substantially circular-arc-shaped guide member positioned along a part of the periphery of said rotary plate, and said guide member is in a slidable contact with said rotary plate but remains in a fixed position with respect to said position detection surface by virtue of a frictional force.

9. The coordinate input apparatus according to claim 3, wherein said support means is a fixed plate sandwiched between said position detection surface and said rotary plate, and said fixed plate rotatably supports said center position of said rotary plate via a shaft member perpendicular to said fixed plate, and said fixed plate is brought into slidable contact with said rotary plate but remains in a fixed position with respect to said position detection surface by virtue of a frictional force.

10. The coordinate input apparatus according to claim 9, wherein said rotary plate is a rectangular plate.

11. The coordinate input apparatus according to claim 9, wherein said rotary plate is a triangular plate.

12. The coordinate input apparatus according to claim 1, wherein said rotary plate is provided with a finger grip indentation formed in a surface thereof.

13. The coordinate input apparatus according to claim 1, wherein said rotary plate is provided with a finger grip projecting from a surface thereof.

14. The coordinate input apparatus according to claim 1, wherein said first indication means is a stylus pen.

15. The coordinate input apparatus according to claim 1, comprising a stopper mechanism for stably stopping said rotary plate at a plurality of preset positions when said rotary plate rotates.

16. A coordinate input method for use in a coordinate input apparatus including a position detection surface in which a plurality of coils are aligned in a direction of position detection, and at least one indication means having a coil or a resonance circuit, said coordinate input apparatus deciding a coordinate indicated by said indication means from a signal obtained by electromagnetic action between said position detection surface and said indication means, said coordinate input method comprising the steps of:

providing a rotary plate made of a flat plate positioned parallel to, and within, said position detection surface, said rotary plate being rotatable around the center specified in said position detection surface;

recognizing variations in orientation of said rotary plate resulting from rotation of said rotary plate; and

calculating a relative coordinate, with respect to said rotary plate positioned at the coordinate indicated by said indication means, on the basis of said coordinate indicated by said indication means and information on orientation of said rotary plate when said indication means indicates said position on said rotary plate.

17. A coordinate input method for use in a coordinate input apparatus including a position detection surface in which a plurality of coils are aligned in a direction of position detection, and a plurality of coils or resonance circuits, said coordinate input apparatus possessing a multi-device function for deciding each coordinate indicated by each of said plurality of indication means from a signal obtained by electromagnetic action between said position detection surface and said indication means, said coordinate input method comprising the steps of:

providing a first indication means which can indicate an arbitrary position in said position detection surface;

providing a rotary plate made of a flat plate positioned parallel to, and within, said position detection surface, said rotary plate being rotatable around the center specified in said position detection surface;

providing a second indication means incorporated into said rotary plate which is rotatable together with the same; and

calculating a relative coordinate of a coordinate indicated by said first indication means, with respect to a coordinate indicated by said second indication means, on the basis of said coordinate indicated by said first indication means and said coordinate indicated by said second indication means when said first indication means indicates said position on said rotary plate.

18. The coordinate input method according to claim 16, wherein the input of graphics data on said rotary plate by the use of said first indication means, said input is done while said rotary plate is rotated during said input.

19. The coordinate input method according to claim 16, wherein the input of graphics data, drawn on paper fixed on top of said rotary plate, by the use of said first indication means, said input is done by tracing said graphics while the orientation of said graphics is changed by rotating said rotary plate through a desired angle during said input.

**Fig.1**

Fig.2A

Fig.2B

Fig.2C

EP 0 732 665 A1

$$\overrightarrow{RP} = \overrightarrow{OP} - \overrightarrow{OR} = (x_P - x_R,\ y_P - y_R)$$
$$= (\Delta x,\ \Delta y)$$

**Fig.3**

Two ways of drawing a circumference

# Fig.4A

# Fig.4B

Pen is moved

Rotary plate is rotated

EP 0 732 665 A1

**Fig.5A**

30

400

410

32

**Fig.5B**

10

30

32

Fig.6A   Fig.6B   Fig.6C   Fig.6D   Fig.6E

**Fig.7**

Fig.8A

Fig.8B Fig.8C Fig.8D

EP 0 732 665 A1

EP 0 732 665 A1

**Fig.9A**

**Fig.9B**

**Fig.9C**

EP 0 732 665 A1

European Patent Office

**EUROPEAN SEARCH REPORT**

Application Number

EP 95 11 4162

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB-A-2 234 832 (CHURCH LESLIE ROBERT;PARSLEY DUNCAN EDWARD) 13 February 1991<br>* the whole document *<br>--- | 1-3,16, 17 | G06K11/16<br>G06K11/06 |
| A | EP-A-0 499 641 (WACOM CO LTD) 26 August 1992<br>* page 4, line 3 - line 24 *<br>--- | 1-3,16, 17 | |
| A | US-A-4 450 774 (WEAVER JOHNNY L) 29 May 1984<br>* the whole document *<br>----- | 1-3, 15-17 | |
| | | | TECHNICAL FIELDS SEARCHED (Int.Cl.6) |
| | | | G06F<br>G06K<br>B43L |

The present search report has been drawn up for all claims

| Place of search | Date of completion of the search | Examiner |
|---|---|---|
| THE HAGUE | 19 June 1996 | Bailas, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21